# EUROPÄISCHE PATENTANMELDUNG

(11) **EP 2 298 055 A1**
(43) Veröffentlichungstag der Anmeldung: **23.03.2011**
(21) Anmeldenummer: 10401121.8
(22) Anmeldetag: 22.07.2010
(51) Int. Cl.: A01C 7/08

(54) **Verteiler für eine Verteilmaschine**

(30) Priorität: 05.08.2009 DE 102009026333
(71) Anmelder: Amazonen-Werke H. Dreyer GmbH & Co. KG, 49205 Hasbergen (DE)
(72) Erfinder: Brüggemann, Klaus, 27777 Ganderkesee (DE); Wilken, Martin, 26409 Wittmund (DE); Tiessen, Reimer Uwe, 26135 Oldenburg (DE)

(57) **Zusammenfassung**

Verteiler für eine pneumatische Verteilmaschine für Saatgut, Dünger und dergleichen mit folgenden Merkmalen:
1.6. einen ringförmigen Verteilerraum definierenden Verteilerkopf,
1.7. in den Verteilerkopf mündet mindestens eine Zuführleitung
1.8. an den Verteilerkopf schließen, mit Abstand zu der Zuführleitung, Verteilerleitungen an,
1.9. zumindest einen Absperrschieber,
1.10. der Absperrschieber ist in den ringförmigen Verteilerraum einschiebbar und aus diesem heraus bewegbar und zwar derart, dass in seiner Absperrposition Luft von der Zuführleitung zu den Eintrittsöffnungen der abgesperrten Verteilerleitungen gelangt. Um , hier auf einfache Weise Abhilfe zu schaffen, ist vorgesehen, dass der Absperrschieber luftdurchlässig ausgebildet ist.

## Beschreibung

### [Beschreibung]

Die Erfindung betrifft einen Verteiler für eine pneumatische Verteilmaschine gemäß des Oberbegriffes des Patentanspruches 1.

Ein derartiger Verteiler ist beispielsweise durch die DE 102 10 010 B4 bekannt. Bei diesem Verteiler ist ein Absperrschieber vorgesehen, der die Form eines zum ringförmigen Verteilerraumes konzentrischen Zylinderabschnittes aufweist. Mittels dieses Absperrschiebers können gleichzeitig mehrere Eintrittsöffnungen von Verteilerleitungen abgesperrt werden, so dass in einfacher Weise die Arbeitsbreite reduziert wird. Damit zuviel geförderte Förderluft bei Absperrung von Verteilerleitungen durch den eingeschobenen Absperrschieber über abgesperrte Verteilerleitungen zu ermöglichen, ist beim Stand der Technik vorgesehen, dass die Absperrschieber beabstandet zu den Verteilerleitungen angeordnet sind. Hierdurch kann Förderluft zwischen den Enden des Absperrschiebers und den Seitenwandungen des Verteilerkopfes zu den abgesperrten Verteilerleitungen gelangen. Dies birgt jedoch die Gefahr, dass zu verteilendes Material von dem entweichenden Förderstrom durch den Zwischenraum an dem Absperrschieber vorbei zu den an sich abgesperrten Verteilerleitungen mitgerissen wird.

Der Erfindung liegt die Aufgabe zugrunde, hier auf einfache Weise Abhilfe zu schaffen.

Diese Aufgabe wird erfindungsgemäß dadurch gelöst, dass der Absperrschieber luftdurchlässig ausgebildet ist. Hierdurch ist es möglich, dass aufgrund der Luftdurchlässigkeit des Absperrschiebers die zu viel geförderte Förderluft durch den Absperrschieber entweichen kann. Somit ist, auch wenn der Absperrschieber einen Bereich des Verteilerraumes völlig absperrt, eine Abfuhr der zu viel zugeführter Förderluft durch die Zuführleitung bei einer Teilabsperrung des Verteilerraumes gewährleistet.

Das Entweichen von Luft durch den Absperrschieber kann dadurch gewährleistet sein, dass der Absperrschieber aus einem luftdurchlässigen Material oder einem siebartigen Material besteht.

Damit keine auszubringenden Saatkörner durch den Absperrschieber entweichen können, ist vorgesehen, dass das aussiebartigen Material ein Sieb ist, dessen Maschenweite kleiner als das auszubringende körnige Material ist.

Um den Verteiler und den Absperrschieber an verschiedene auszubringende Materialien, wie beispielsweise Mais, Raps oder Getreide Gerste etc. anpassen zu können, ist vorgesehen, dass Absperrschieber mit verschiedenen großen Maschenweiten und/oder verschieden großer Luftdurchlässigkeit vorhanden und gegeneinander austauschbar sind.

Um eine besonders gute und gleichmäßige Aufteilung des Materials bei eingeschobenem Absperrschieber auf die nicht abgesperrten Verteilerleitungen in einfacher Weise zu erreichen, ist vorgesehen, dass der Absperrschieber die Form eines zum ringförmigen Verteilerraum nicht konzentrischen Zylinderabschnittes aufweist. Infolge dieser Maßnahmen lässt sich der Absperrschieber in einfacher Weise dahingehend optimieren, dass durch die Form des Absperrschiebers, die von der konzentrischen Ausgestaltung im Hinblick auf den Verteilerraum abweichend ist, eine Vergleichmäßigung der Aufteilung des zugeführten Materiales im Verteilerraum auf die nicht abgesperrten Leitungen erfolgt. In einfacher Weise lässt sich dieses dadurch erreichen, dass die Absperrschieber aus zwei winklig zueinander angeordneten Flächenelemente bestehen. Hierbei hat es sich als vorteilhaft erwiesen, dass zwischen den beiden winklig zueinander angeordneten Flächenelementen als Übergangsbereich ein Zylinderabschnitt angeordnet ist. Hierdurch kann eine einfache Ausgestaltung der Verbindung der beiden winklig zueinander angeordneten ebenen Flächenelementen erfolgen.

Eine vorteilhafte Ausgestaltung des Absperrschiebers zur Erreichung einer möglichst gleichmäßigen Aufteilung des von der Zuführungsleitung zugeführten Materials im Verteilerraum auf die nicht abgesperrten und somit weiter aktiven Eintrittsöffnungen der Verteilerleitungen lässt sich dadurch erreichen, dass der Absperrschieber in seinem der Zuführleitung unmittelbar benachbarten Bereich einen kreisförmigen Zylinderabschnitt aufweist, dass sich an den zylinderförmigen Abschnitt nicht kreisförmige Flächenabschnitte anschließen, die zumindest annähernd in eine ebene Fläche auslaufen.

Weitere Einzelheiten der Erfindung sind der Beispielsbeschreibung und den Zeichnungen zu entnehmen. Hierbei zeigen
- Fig. 1: den Verteilerkopf eines pneumatischen Verteil- und Dosiersystems mit im Halbschnitt dargestellten Verteilerkopfdeckel, wobei der Absperrschieber in seiner Absperrposition sich befindet, in perspektivischer Darstellung,
- Fig. 2: den Verteilerkopf in der Darstellungsweise nach Fig. 1, wobei der Absperrschieber sich in halb eingeschobener Stellung in den Verteilerraum des Verteilerkopfes befindet,
- Fig. 3: den Verteilerkopf in der Darstellung nach Fig. 1, wobei der Absperrschieber sich in der eingezogenen Position befindet,
- Fig. 4: den Verteilerkopf in der Draufsicht mit abgenommenem Verteilerkopfdeckel und
- Fig. 5: einen weiteren Verteilerkopf in der Darstellungsweise nach Fig. 4 mit einer anderen Ausgestaltung des Absperrschiebers.

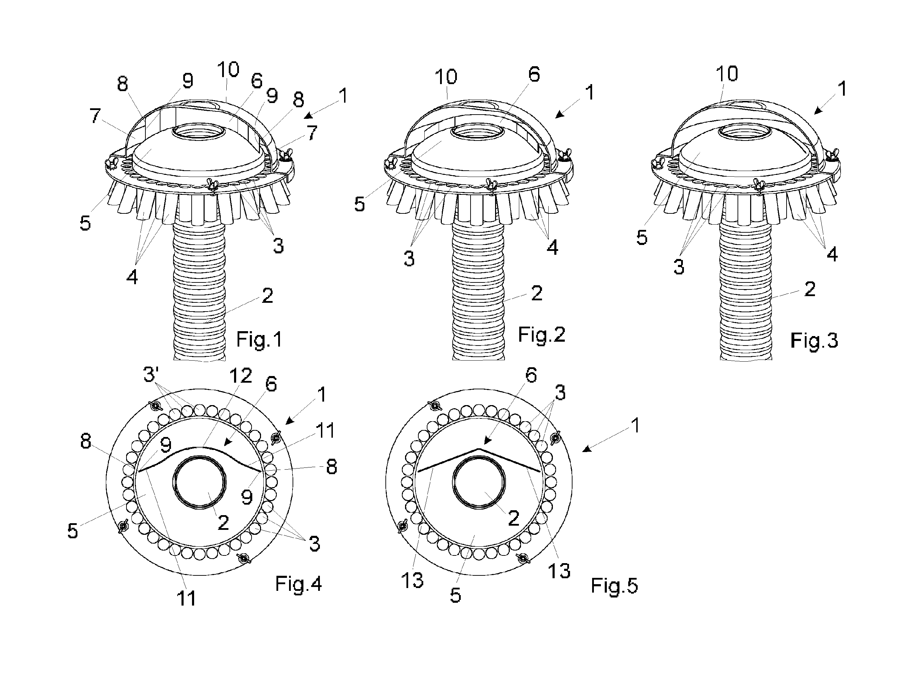

Der in den Fig. 1 bis 4 dargestellte Verteilerkopf 1 ist Bestandteil eines pneumatischen Dosier- und Verteilsystems einer pneumatischen arbeitenden landwirtschaftlichen Verteilmaschine.

Über das Zuführrohr 2, welches mit einem pneumatischen Förderluftstrom, der von einem motorisch angetriebenen Gebläse erzeugt wird, beaufschlagt ist, wird dem am Ende des Zuführrohres 2 angeordneten Verteilerkopf 1 das auszubringende Material, beispielsweise Saatgut oder Dünger in einstellbarer Weise zugeführt. Über den Verteilerkopf 1 wird das Material in bekannter Weise auf die zu einzelnen Ausbringorganen führende Eintrittsöffnungen 3 aufweisenden Verteilerleitungen 4 aufgeteilt.

Der Verteilerraum 5 des Verteilerkopfes 1 ist ringförmig ausgestaltet. Von dem Verteilerkopf 1 aus führen, wie bereits erwähnt, mehrere Zuführleitungen 4, die Eintrittsöffnungen 3 aufweisen, weg.

Dem Verteilerkopf 1 ist ein Absperrschieber 6, der von unten in den Verteilerraum 5 des Verteilerkopfes 1 einschiebbar ist, zugeordnet. Dieser Absperrschieber 6 ist in den Verteilerraum 5 zum Absperren einzuschieben, so dass also einige Eintrittsöffnungen 3 der Verteilerleitungen 4 absperrbar sind, und aus dem Verteilerraum 5 herausbewegbar, so dass das zugeführte Material auf alle Eintrittsöffnungen 3 der Verteilerleitungen 4 in gleichmäßiger Weise aufgeteilt wird.

Der Absperrschieber 6 ist in seiner Absperrstellung entsprechend der Fig. 1 beabstandet zu den Eintrittsöffnungen 3 der Verteilerleitungen 4 und zu den Seitenwandungen 7 des Verteilerraumes 5 angeordnet, so dass die Luft von der Zuführleitung 2 zu den Eintrittsöffnungen 3' der abgesperrten Verteilerleitungen durch den Zwischenraum 8 zwischen den Seitenenden 9 des Absperrschiebers 6 und den benachbarten Seitenwandungen 7 des Verteilerkopfdeckels 10 gelangt, wie Fig. 1 und 4 zeigen.

Der Absperrschieber 6 weist, wie in Fig. 4 erkennbar ist, die Form eines zum ringförmigen Verteilerraum 5 nicht konzentrischen Zylinderabschnittes auf. Hierbei besteht der Absperrschieber 6 aus zwei winklig zueinander angeordneten Flächenelementen 11, die im Übergangsbereich durch einen Zylinderabschnitt 12 miteinander verbunden sind. Der Absperrschieber 6 weist in seinem der Zuführleitung 2 unmittelbar benachbarten Bereich den die beiden Flächenabschnitte 11 miteinander verbindenden kreisförmigen Zylinderabschnitt 12 auf. An den zylinderförmigen Abschnitt 12 schließen sich die nicht kreisförmigen Flächenelemente 11 an, die in annähernd ebene Flächen auslaufen.

Gemäß dem Ausführungsbeispiel nach Fig. 5 besteht der Absperrschieber 6 aus zwei winklig miteinander verbundenen Flächen 13.

Um eine verbesserte Luftabführung aus dem Verteilerkopf 1 bei in dem Verteilerraum 5 in Absperrstellung eingeschobenen Absperrschieber 6 zu erreichen, besteht der Absperrschieber 6 aus einem luftdurchlässigen Material, so dass er luftdurchlässig ausgebildet ist. Hierbei kann der Absperrschieber 6 aus einem siebartigen Material bestehen. Das siebartige Material ist hierbei ein Sieb, dessen Maschenweite kleiner als der Durchmesser des auszubringenden körnigen Materials ist. Um sich in vorteilhafter Weise an verschiedene auszubringende Materialien anpassen zu können, sind Absperrschieber 6 mit verschieden großen Maschenweiten und verschieden großer Luftdurchlässigkeit vorhanden, die in einfacher Weise gegeneinander ausgetauscht werden können.

Wenn der Absperrschieber 6 aus einem luftdurchlässigen Material besteht, kann entgegen der Ausgestaltung in den Ausführungsbeispielen in den Fig. 1 bis 5 der Absperrschieber 6 auch die abzusperrenden Bereiche des Verteilerraumes völlig vom noch weiter aktiven Verteilerraum absperren. Hierbei ist der Absperrschieber dann bis an die Wandungen des Verteilerraumes 5 und den des Deckels 10 herangeführt.

## Patentansprüche

1. Verteiler für eine pneumatische Verteilmaschine für Saatgut, Dünger und dergleichen mit folgenden Merkmalen:
1.1. einen ringförmigen Verteilerraum definierenden Verteilerkopf,
1.2. in den Verteilerkopf mündet mindestens eine Zuführleitung
1.3. an den Verteilerkopf schließen, mit Abstand zu der Zuführleitung, Verteilerleitungen an,
1.4. zumindest einen Absperrschieber,
1.5. der Absperrschieber ist in den ringförmigen Verteilerraum einschiebbar und aus diesem heraus bewegbar und zwar derart, dass in seiner Absperrposition Luft von der Zuführleitung zu den Eintrittsöffnungen der abgesperrten Verteilerleitungen gelangt,
**dadurch gekennzeichnet,**
**dass** der Absperrschieber ( 6 ) luftdurchlässig ausgebildet ist.

2. Verteiler nach Anspruch 1, **dadurch gekennzeichnet, dass** der Absperrschieber (6) luftdurchlässig ausgebildet ist.

3. Verteiler nach Anspruch 1, **dadurch gekennzeichnet, dass** der Absperrschieber (6) aussiebartigem Material besteht.

4. Verteiler nach Anspruch 1, **dadurch gekennzeichnet, dass** aussiebartigem Material ein Sieb ist, dessen Maschenweite kleiner als das auszubringende körnige Material ist.

5. Verteiler nach Anspruch 1, **dadurch gekennzeichnet, dass** Absperrschieber (6) mit verschiedenen großen Maschenweiten und/oder verschieden großer Luftdurchlässigkeit vorhanden und gegeneinander austauschbar sind.

6. Verteiler nach Anspruch 1, **dadurch gekennzeichnet, dass** die Seitenenden des Absperrschiebers (6) in seiner Absperrstellung beabstandet zu den Eintrittsöffnungen (3) der Verteilerleitungen (4) und/oder zu den Seitenwandungen (7) des Verteilerraumes (5) angeordnet sind, so dass Luft von der Zuführleitung (2) zu den Eintrittsöffnungen (3) der abgesperrten Verteilerleitungen (3") durch den Raum zwischen den Seitenenden (8) des Absperrschiebers (6) und der benachbarten Seitenwandung (7) des Verteilerraumes (5) gelangt.

7. Verteiler nach Anspruch 1, **dadurch gekennzeichnet, dass** der Absperrschieber (6) die Form eines zum ringförmigen Verteilerraum (5) nicht konzentrischen Zylinderabschnittes aufweist.

8. Verteiler nach Anspruch 7, **dadurch gekennzeichnet, dass** der Absperrschieber (6) aus zwei winklig zueinander angeordneten Flächenelementen (11,13) besteht.

9. Verteiler nach Anspruch 8, **dadurch gekennzeichnet, dass** zwischen den beiden winklig zueinander angeordneten Flächenelementen (11,13) als Übergangsbereich ein Zylinderabschnitt (12) angeordnet ist.

10. Verteiler nach Anspruch 7, **dadurch gekennzeichnet, dass** der Absperrschieber (6) in seinem der Zuführleitung (2) unmittelbar benachbarten Bereich einen kreisförmigen Zylinderabschnitt (12) aufweist, dass sich an den zylinderförmigen Abschnitt (12) nicht kreisförmige Flächenabschnitte anschließen, die zumindest annähernd in eine ebene Fläche (11) auslaufen.
